Europäisches Patentamt

European Patent Office

Office européen des brevets

(11) Publication number: **0 348 663**
**A2**

## EUROPEAN PATENT APPLICATION

(21) Application number: 89109152.2

(51) Int. Cl.⁴: **G06F 11/00**

(22) Date of filing: 20.05.89

(30) Priority: 27.06.88 US 211584

(43) Date of publication of application:
03.01.90 Bulletin 90/01

(84) Designated Contracting States:
DE FR GB

(71) Applicant: **International Business Machines Corporation**
**Old Orchard Road**
**Armonk, N.Y. 10504(US)**

(72) Inventor: **Harvey, Paul David**
**815 Morlando Drive**
**Endicott New York 13760(US)**
Inventor: **Roche, Thomas James**
**1025 Holly Lane**
**Endwell New York 13760(US)**
Inventor: **Santoni, John Gerard**
**720 Keenan Drive**
**Vestal New York 13850(US)**
Inventor: **Still, Gregory Scott**
**2018 Ford Road**
**Endwell New York 13760(US)**

(74) Representative: **Jost, Ottokarl, Dipl.-Ing.**
**IBM Deutschland GmbH Patentwesen und**
**Urheberrecht Schönaicher Strasse 220**
**D-7030 Böblingen(DE)**

(54) Simultaneous trans-processor broadcast of machine conditions in a loosely-coupled multi-processor system.

(57) Trans-processor broadcast of processor condition indications in a loosely coupled, multi-processor system employs a programmable broadcast entity in each system processor for collecting condition indications including error and address match conditions from the units of the processor and communicating the condition indications to the broadcast entities of the other processors. Each processor also has provision for selectively initiating interruption of process execution in response to a broadcast condition indication. The programmability of the broadcast entity permits the conditioning of response to the receipt of a condition indication from the processor's components, as well as the conditioning of response to condition indications broadcast from the other processors.

FIG. 1

## SIMULTANEOUS TRANS-PROCESSOR BROADCAST OF MACHINE CONDITIONS IN A LOOSELY-COUPLED MULTI-PROCESSOR SYSTEM

This invention relates to the trans-processor broadcast of condition indications in a processor system including a plurality of loosely-coupled processors operating at independent and asynchronous clock rates.

In the discussion and disclosure to follow, reference is made to "loosely-coupled" systems. In our context, this term is intended to refer to a processor system employing a plurality of autonomous, yet cooperatively operating processors which are connected, yet which operate independently and at asynchronous clock rates. This term is contrasted, for example, with the concept of "tightly-coupled" processors, which are processors which share main storage, are controlled by the same control program, and can communicate directly with each other. In addition, a "processor" is a device or unit "capable of receiving data, manipulating it, and supplying results", (Sippl, Computer Dictionary, 1985, Page 365). When used herein, the term "processor" can refer, but is not limited, to a central processing unit (CPU), an I/O processor, or a storage controller unit.

Currently, when a machine condition indication such as a machine check or address match occurs in a loosely-coupled system, the strategy is to isolate the specific processor raising the condition, and to fence that processor. The intent of isolating the processor is to minimize system-level damage, to facilitate recovery, or to restart the processor. Inherently, however, the strategy is constrained by the failure to account for the operational states of all other processors at the time the condition occurred, unless the clocks of those processors are stopped. As a consequence, it is difficult to associate a specific machine error or address match with the simultaneous activities of all other processors in a loosely coupled system for the purpose of enhancing the capability of the system to diagnose and correct detected errors.

In this regard, address matching is of particular importance to the effective use of, for example, microprogrammed diagnostics employing trace routines to isolate errors by stepping through a sequence of routine program portions. Typically, a diagnostic program will detect the completion of a program portion when the current microprogram address matches an address corresponding to the end of the portion of interest.

The generation of a machine check interruption in response to the occurrence of a machine error is of particular interest in machine diagnostics which inject errors into hardware for testing the effectiveness of hardware and microcode retry and recovery mechanisms.

In a loosely-coupled system, a diagnostic program which "exercises" the whole complement of processors must be able to communicate conditioned occurrences, such as error and address match indications, to all of the loosely-coupled processors so that the state of each processor can be ascertained or, if need be, frozen upon the occurrence of an event.

It is an object of the present invention to provide for the simultaneous, trans-processor communication of machine conditions to all the processors of a loosely-coupled processor system in which the processors operate at independent and asynchronous clock rates.

The invention realizes this objective by the provision of a programmable facility that (1) allows each processor in a loosely-coupled system to be notified of the occurrence of a machine check or address match condition occurring in another processor of the system, and (2) enables each processor to notify every other processor in the system when the processor detects such a condition. Each processor is enabled to respond in a preprogrammed manner to a condition indication communicated from another processor or detected within itself. This provides a great deal of flexibility in the design and implementation of a diagnostic structure in that the processors can be placed into states which will not adversely affect the processor in which the condition initially arose.

In summary, the invention is intended for practice in a processing system including a plurality of interconnected, loosely-coupled processors, each processor including indication means for providing machine and process condition indications. The improvement is for simultaneously communicating a machine condition indication arising in one of the processors to all of the other processors. The improvement of the invention includes, in a first of the processors, a condition indication collector connected to the indication means in that processor for collecting condition indications produced by that indication means. A programmed action indicator produces action directive signals, a first of which corresponds to a broadcast directive signal signifying that a condition indication signal is to be communicated to the other units of the system. Finally, a condition broadcaster is connected to the condition collector and to the programmed action indicator for combining a first one of the collection indications with the first action directive signal to produce a condition indication broadcast signal. A transfer capability is provided for transferring the condition broadcast signal to each of the loosely-coupled units. Last, in a second one of the processors, a programmed responder is connected to the transfer means for selectively interrupting execution of the process in response to the conditioned broadcast signal and according to a first one of a plurality of programmed responses.

The achievement of the stated objective by the summarized invention will be appreciated by reading of the following detailed description of the invention with reference to the below-described drawings.

## BRIEF DESCRIPTION OF THE DRAWINGS

Fig.1 is a block diagram illustrating a loosely-coupled system including a plurality of functional processors and a diagnostic processor.

Fig. 2 is a block diagram illustrating the primary functional subdivisions of the invention, and their primary interconnections.

Fig. 3 is a circuit diagram illustrating a machine check collection and broadcast component of the invention.

Fig. 4 is a circuit diagram illustrating an address match collection and broadcast component of the invention.

Fig. 5 is a schematic diagram illustrating a clock generator component of the invention which is connected to the machine check and address match components of Figures 3 and 4, respectively.

Figs. 6 and 7 are timing diagrams illustrating respective operational sequences of the invention.

Fig. 7 is a block diagram illustrating a freeze trace response initiated by the invention.

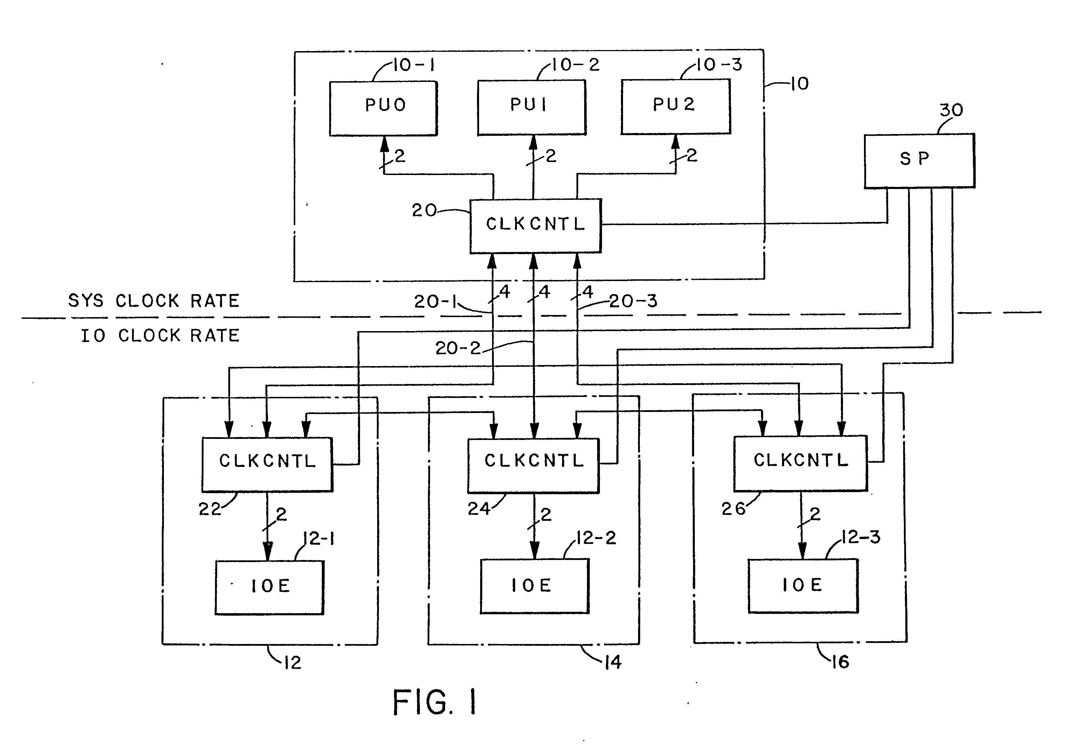

Figure 1 illustrates an operational environment which is preferred for the practice of the invention. In Figure 1 a loosely-coupled computing system includes a plurality of processors 10, 12, 14, and 16, operating at independent and asynchronous clock rates. The processor 10 can comprise, for example, a functional processor with a plurality of processing units 10-1 through 10-3, which is intended to receive and process data in order to produce results. The processor units 10-1 through 10-3 are, characteristically, modularized and physically located on field replaceable units (FRU). The FRU's are plugged into a "mother" board with backplane bussing structure for interconnecting the processing units. Such processing units are typically performance sensitive, synchronously-operating components. For example, the processing component 10-1 can comprise a scalar CPU which is linked functionally with a vector processor, represented by the processor component 10-2. Finally, a storage access processor providing a storage access channel could be represented by the processor component 10-3.

The processors 12, 14 and 16 are I/O processors, and are connected to the functional processor 10 for the provision of a plurality of bidirectional I/O paths between the processor 10 and a plurality of memory resources. Such resources can include directly-accessible storage devices, or other processing systems. As is known, each of the I/O processors 12, 14, and 16, operates according to its own particular bandwidth requirement at a rate (I/O CLOCK RATE) which is asynchronous with the rates of the other I/O processors and with the system clock rate (SYS CLOCK RATE) of the functional processor.

If a machine check occurs in one of the I/O channel processors, the machine check may correspond to an error resulting in the corruption of stored data in a memory resource accessed by the processor. If so, such data corruption may cascade through the I/O processor to the functional processor, and back to another of the I/O processors.

In order to provide for the detection of, and response to, potentially cascading errors, a machine support system including a support processor (SP) 30 is provided. The SP 30 executes functions which allow the loosely-coupled system including the processors 10, 12, 14 and 16 to be started, stopped, monitored, and otherwise maintained. The SP is connected to the processors conventionally by, for example, a local area network (LAN) connection. The support processor can comprise a Personal System/2 (PS/2) computer available from International Business Machines Corporation (IBM).

The support processor is enabled to perform support functions by connection to each of four maintenance support entities, preferably designated as clock control (CLKCNTL) units 20, 22, 24 and 26. Each of the clock control units is tightly-coupled to a respective one of the processors 10, 12, 14 and 16, and, for the purposes of this description, is considered to be a unit of its respective processor. Each of the clock control units 20, 22, 24, and 26 is connected, by a bidirectional data transfer path with the support processor 30, providing the capability for the support processor 30 to remotely program each of the units on a selective basis. The bidirectional data paths further provide for the conduction to the support processor 30 of information-bearing signals from each of the CLKCNTL units 20, 22, 24 and 26.

The invention concerns the broadcasting of information relating to machine conditions. More precisely, "broadcast" refers to the simultaneous dissemination of machine condition indications from one to the

3

remaining of the loosely-coupled processors. The invention contemplates the broadcast of the machine condition indications between the processors by way of programmable CLKCNTL units.

Each CLKCNTL unit is provided with programmable means which selectively respond to a machine condition indication provided by a processing unit in the served proessor ("local machine condition") and to a machine condition indication broadcast by another CLKCNTL unit ("broadcast machine condition").

The response of a CLKCNTL unit to a local machine condition is preferably to disseminate the machine condition by broadcasting it to the other CLKCNTL units. In the invention, the CLKCNTL unit can also respond to a local machine condition or to a broadcast machine condition by broadcasting the condition indication to the processing units which make up the served processor. This is referred to as "internal broadcast". Finally, a CLKCNTL unit response also include broadcasting machine conditions which are received by the unit as broadcast machine conditions. This is referred to in the following description as "rebroadcast".

Within its respective processor, each of the clock control units is connected to one or more process units. As shown in Figure 1, the CLKCNTL unit 20 is connected to each of three processing units 10-1 through 10-3 by two data paths. The data paths are for conducting to the processing unit respective broadcast signals, described in greater detail below. Correspondingly, each of the CLKCNTL units 22, 24 and 26 is connected by two data paths to internal unit of the respective processors 12, 14 and 16. The two data paths are for forwarding received broadcast signals.

Each CLKCNTL unit also shares a four-lead interconnection with every other CLKCNTL unit. Each four-lead interconnection comprises a port, each port including two signal paths for conducting two broadcast signals from one to another CLKCNTL unit, and two signal paths for conducting a pair of broadcast signals from the other to the one CLKCNTL unit. The four-lead interconnections between the CLKCNTL unit 20 and the other CLKCNTL units are denoted by reference numerals 20-1, 20-2, and 20-3.

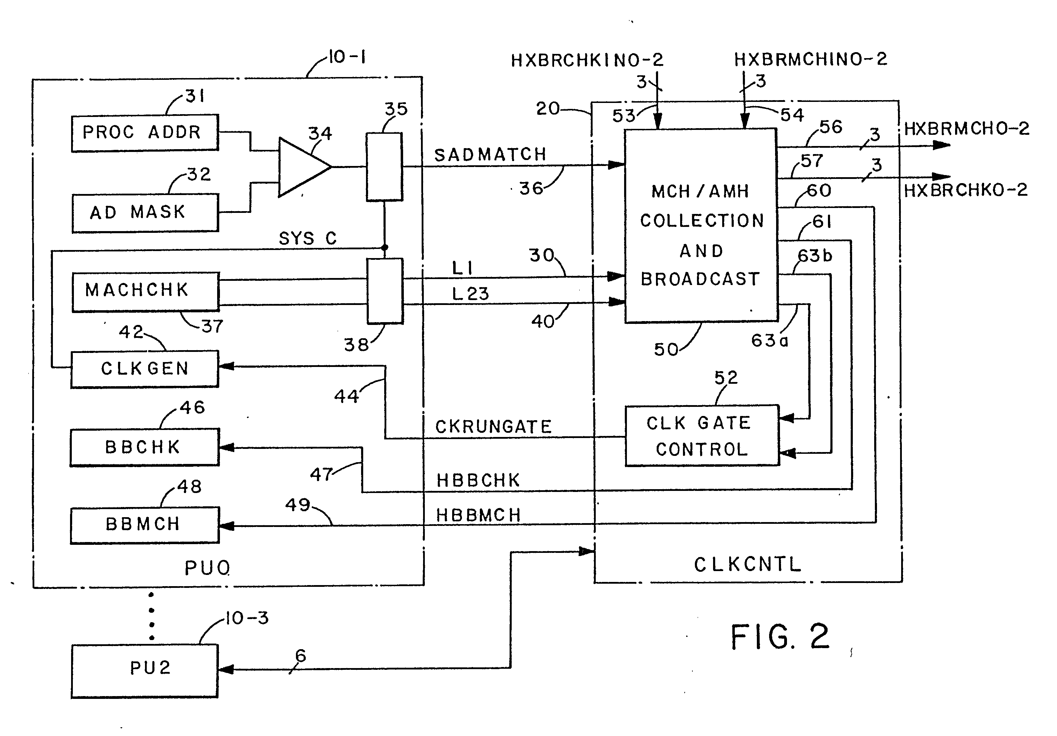

Figure 2 illustrates, in greater detail, the internal functional structure and the external interface structure of a CLKCNTL unit. The CLKCNTL unit 20 of Figure 1 is indicated in Figure 2, together with a detailed illustration of the internal structure of the processing unit 10-1. It must be understood that Figure 2 merely illustrates the CLKCNTL unit structure which generally describes each and every CLKCNTL unit of Figure 1. Processing unit 10-1 is conventional in all respects and may comprise, for example, a vector processor unit including a CPU, and associated control, addressing, and computational circuitry for vector process execution and for reporting the status of such processing. In this regard, the processing unit 10-1 has resources for executing a process in response to a sequence of microcoded instructions, the process providing a process address 30, which is compared with a predetermined process address mask 32 by a comparator 34. When the mask address matches the process address, an address match (SADMATCH) signal is activated at the output of the comparator 34, registered into a clocked latch 35, and provided on the signal line 36. A machine check (MACHCHK) circuit 37 monitors and classifies machine errors occurring in the processing unit 10-1. Errors classified as Level 1 errors, are errors requiring the operational interruption of a group of processing units whose activities are linked to those of the processing unit 10-1, and which can be infected by an error propagating from the processing unit. The MACHCHK circuit 37 also provides indications of Level 2 and Level 3 errors, the first requiring interruption of the operation only of the processing unit 10-1, and the latter requiring reporting, but no operational interruption. The error indications are registered through a clocked latch circuit 38, and output as L1 and L23 signals on signal lines 39 and 40.

The operations of the processing unit 10-1 proceed in response to, and in synchronism with, a unit clock provided by a clock generator (CLKGEN) 42. The generator 42 provides unit clocks only when a clock run gate (CKRUNGATE) signal is activated on signal line 44. When the CKRUNGATE signal is deactivated, the operation of the clock generator in providing unit clocks is interrupted.

The practice of the invention contemplates that each processor unit is provided with means responsive to broadcast machine check and address match signals. In the processor unit 10-1, a broadcast machine check received by the CLKCNTL unit 20 is broadcast internally. The internally broadcast machine check is forwarded to a board broadcast machine check (BBCHK) means 46 on a signal line 47. Similarly, a broadcast address match signal received by the clock control unit 20 is provided to a board broadcast address match response means 48 on signal line 49. Illustrating the functions of BBCHK and BBMCH, 46 and 48, respectively, a machine check condition broadcast by one of the CLKCONTL units 22, 24 or 26, and received by the CLKCNTL unit 20, would be broadcast internally to initiate a microprogrammed machine check analysis and maintenance routine, stored at the processing unit 10-1. Similarly, receipt of a broadcast address match condition could be internally broadcast as a condition input for the machine check routine.

The clock control unit 20 includes a machine and address match (MCH/AMH) collection and broadcast circuit 50 for receiving and collecting local address match and error condition indication signals from processing units. For example, such indications are collected from the processing unit 10-1 on signal lines 36, 39 and 40. Other corresponding information signals are understood to be collected from the other processing units 10-2 and 10-3. In response to receipt of an address match or machine error indication from its connected processing units, the collection and broadcast circuit 50 generates and outputs corresponding broadcast signals for transmission to the other three clock control units. Responsive to machine error indications received from its associated processing units, the clock control unit 20 processes and forwards the machine errors to each of the other three clock control units as broadcast machine check signals HXBRCHK 0-2, respectively. Correspondingly, in response to an address match indication received from one of the processing units 10-1 through 10-3, the collection and broadcast circuit of the clock control unit 20 processes and broadcasts the match indication to each of the connected clock control units by way of the signals HXBRMCH 0-2. Each of the broadcast machine check signals is transferred to a respective one of the connected clock control units on one of the three individual signal lines comprising the broadcast machine check transfer path 57. The broadcast address match signals are transmitted on the three signal lines comprising the address match broadcast transfer path 56.

Three individual signal lines make up the input broadcast machine check transfer path 53. Each of the signal paths is connected to a respective one of the clock control units 22, 24 and 26, for conduction of a broadcast machine check to the unit 20. From the perspective of the unit 20, a broadcast machine check received from another clock control unit is denoted as HXBRCHKIN 0-2, depending upon the source of the signal. Similarly, the input address match broadcast transfer path 54 includes three individual signal paths, each connected to a respective one of the clock control units 22, 24 and 26 for transfer to the unit 20 of a respective one of the broadcast match signals HXBRMCHIN 0-2.

The invention as illustrated in Figure 2 provides support for internal processor response to broadcast machine check and address match signals by internally broadcasting received broadcast signals as HBBMCH (internal broadcasts of HXBRMCHIN 0, 1 OR 2) on signal line 60. Similarly, a broadcast machine check received as HXBRCHKIN 0, 1 or 2 can be broadcast internally, with broadcast to the process unit 10-1 being provided by the signal denoted as HBBCHK on signal line 61. Finally, a clock gate controller 52 which provides a plurality of CKRUNGATE signals, one for each of the processing units 10-1 through 10-3, can receive a MATCH STOP signal on signal line 63a when an address match broadcast is received as one of the signals HXBRMCHIN 0, 1 or 2. Similarly, an HXBRCHKIN signal can cause production of a CLOCK STOP signal on signal line 63b. A signal on either of lines 63a or 63b alters the CKRUNGATE signal configuration in a predetermined, programmed response to an address match broadcast.

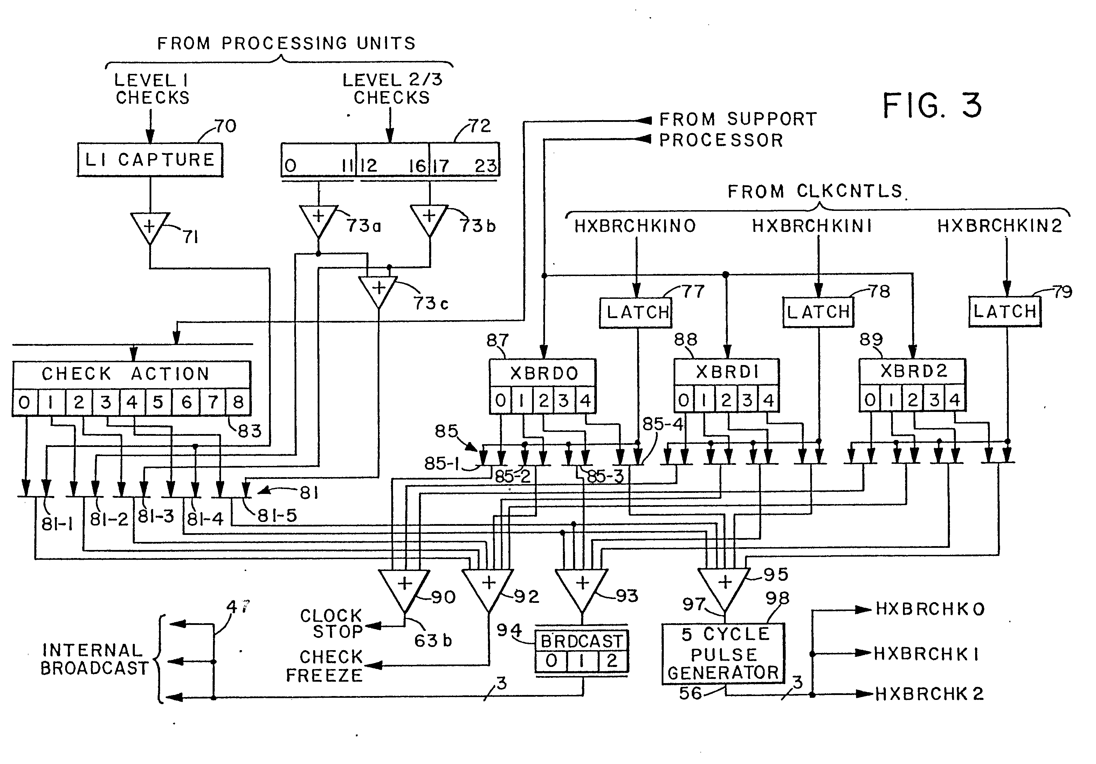

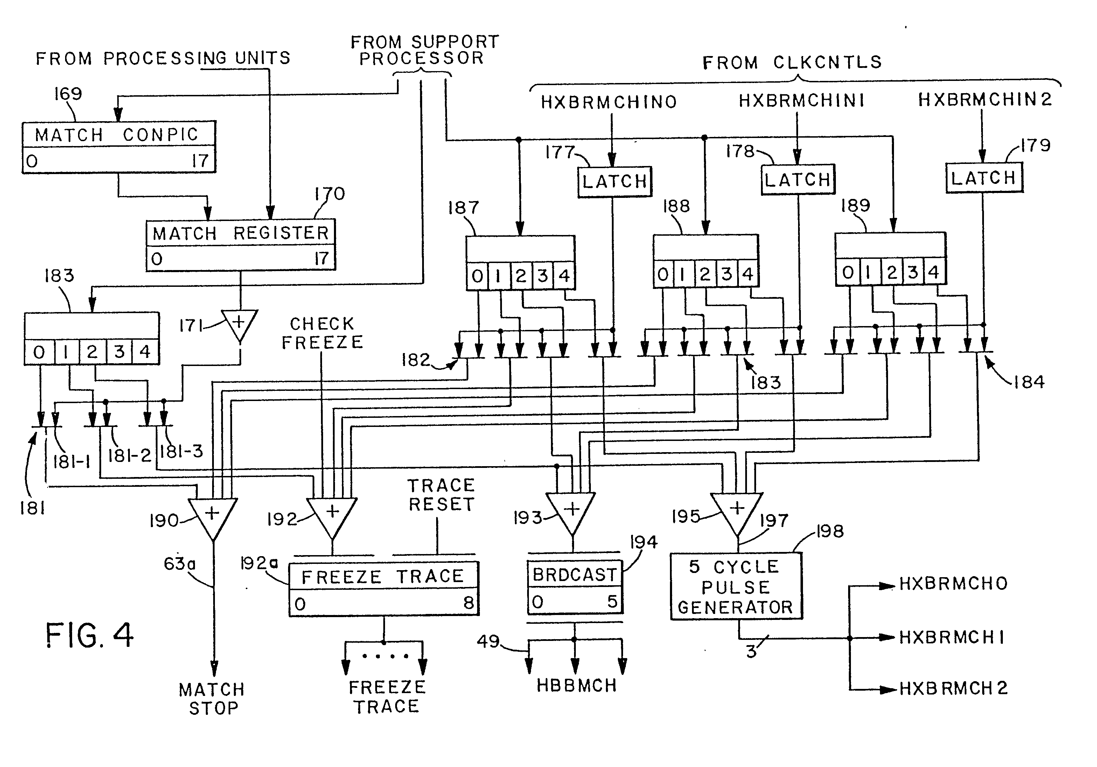

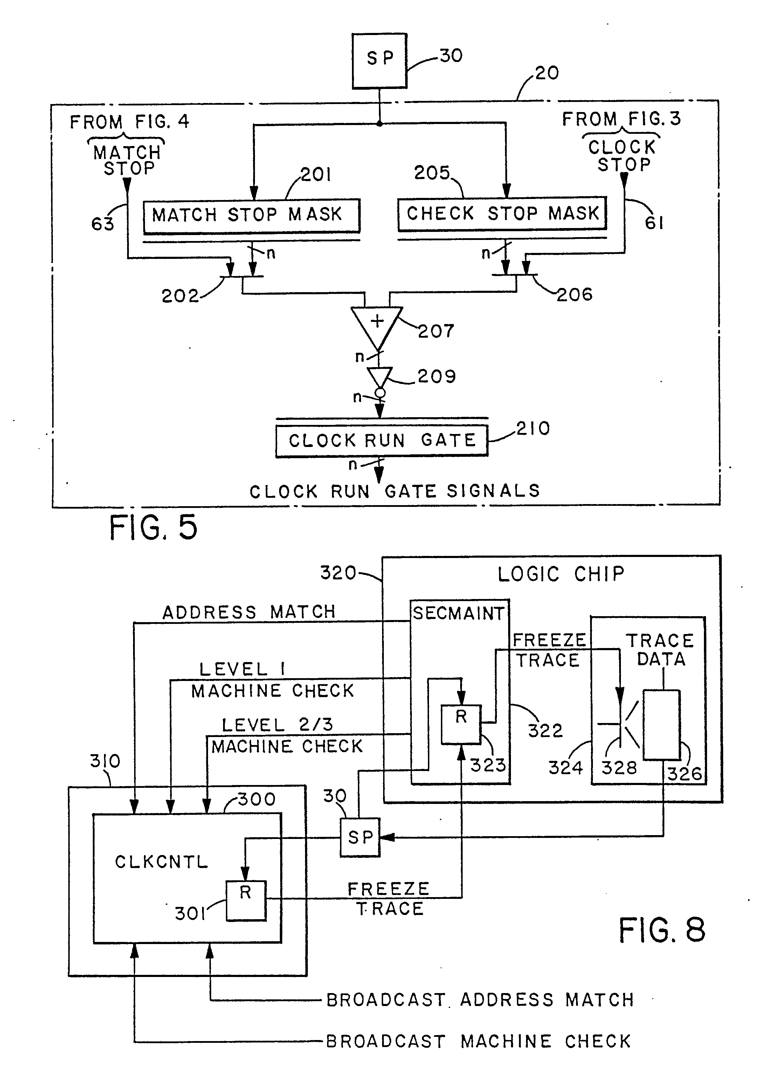

Refer to Figure 3 now for an illustration and explanation of the structure and operations of the collection and broadcast circuit 50 in responding to local machine checks received from the processing units, as well as broadcast machine checks received from the other clock control units. Local error indications from the processing units to which the CLKCNTL unit 20 is connected are received in an L1CAPTURE register 70, or in an L23CAPTURE register 72. A L1 error signal is conducted from the processing unit which generated it to a bit position in the L1CAPTURE register 70 dedicated to that processing unit. Similarly, L23 errors are conducted from their respective originating processing units to particular bit positions in the register 72 which indicate the originating units. The L1 capture register 70 is a conventional parallel in-parallel out register, whose outputs are collected at the input of the OR circuit 71. The capture register 72 is functionally equivalent to the capture register 70. The bit position outputs of the capture register 72 are collected in various patterns by the OR circuits 73, 74 and 75. The OR circuit 73 provides a Level 2/3 check signal, corresponding to receipt of a Level 2 or Level 3 machine check in any bit position of the capture register 72. In addition, a Level 2/3 HI CHECK signal is provided by the OR circuit 74 to indicate a Level 23 signal in bit positions in the most significant bit positions of the capture register 72, while the OR circuit 75 provides a Level 2/3 LO CHECK signal to indicate receipt of a Level 23 error in the least significant bit positions of the capture register 72.

Broadcast machine check signals input from the other three clock control units are received in metastable latches 77, 78 and 79, respectively.

Each of the local Level 1 and Level 2/3 check signals is provided to the input of one or more of the AND gates in the AND gate array 81. The second input for each gate of the array 81 is connected to a respective output of a CHECK ACTION register 83. Thus, for example, AND gate 81-1 receives the output of bit position 0 of the check action register 83 and the Level 1 CHECK signal. Each gate in the bank 81 is a conventional, positive-sense AND gate having two inputs and a single output. The check action register 83 stores a pattern of nine control bits which dictates the response of the CLKCNTL unit to local machine checks. The function assigned to each bit is given in Table I. Table I assumes positive sense digital signalling, in that a "1" in the register bit position indicates the corresponding function is to be performed,

5

while a "0" is intended to prevent the function by disabling the corresponding AND gate.

TABLE I

| CHECK ACTION CONTROL | |
|---|---|
| CHECK ACTION BIT POSITION | FUNCTION |
| 0 | L1 Freeze Trace |
| 1 | L2/3 HI Freeze Trace |
| 2 | L2/3 LO Freeze Trace |
| 3 | L1 Broadcast |
| 4 | L23 Broadcast |
| 8 | CLOCK STOP |

With reference to Table I and Figure 3, bit positions 0, 1, and 2, when set to a "1", enable a freeze trace function for an L1, and L2/3 HI, and an L2/3 LO, respectively. Relatedly, the freeze trace function refers to the seizing up of trace arrays in the loosely coupled processors as a tool for diagnosing the states of the machines when a machine check or address match condition occurrs. In this regard, error debugging using trace techniques is known in the art. For example, Sippl, in his COMPUTER DICTIONARY, Fourth Edition, 1986, defines a trace as an "interpretive diagnostic technique that provides an analysis" of executed instructions and provides analysis output "as each instruction is executed". In the same reference, flow tracing is defined as a type of diagnostics wherein a programmer "specifies the start and end of those program segments where he wishes to examine the contents of various registers and accumulators. The program will run at machine speed until it encounters the desired segments . .". Of course, encounter of the desired segment can be indicated by, for example, a machine check of a certain level. alternatively, it can be indicated by an address match.

Bits 3 and 4 of the check action register 83 selectably enable the clock control unit 20 to broadcast the multi-level machine check conditions provided by the processing units of the processor 10.

The AND gate array 81 determines the action that will be taken by the clock control unit 20 in response to receipt of a local machine check signal, based upon the condition of the check action register bits. For example, assuming check action register bit 0 is set, receipt of a Level 1 machine check will activate the output of the AND gate 81-1. The AND gate 81-1 and the AND gates enabled by check action bits 1 and 2 participate in control of a freeze trace procedure described below. The gates 81-4 and 81-5 are enabled by check action register bits 3 and 4 to control the broadcast of Level 1 or Level 23 machine checks from the clock control unit 20.

The response of the clock control signal unit of a broadcast machine check is conditioned by combination of the related HXBRCHKIN signal with a broadcast action register bit. In this regard, each HXBRCHKIN signal is provided to a broadcast response circuit consisting of a broadcast action register and an array of AND gates. For example, the signal HXBRCHKIN0, when registered into the metastable latch 77 is combined in each of the AND gates in the array 85 with a respective one of bits 0-2 and 4 of broadcast action (XBRD0) register 87. Table II defines the functions for the broadcast action registers, including the register 87.

TABLE II

| CHECK BROADCAST ACTION CONTROL | |
|---|---|
| CHECK BROADCAST ACTION BIT | FUNCTION |
| 0 | CLOCK STOP |
| 1 | FREEZE TRACE |
| 2 | INTERNAL BROADCAST |
| 4 | RECIRCULATE BROADCAST |

Check broadcast action bit 0 defines a clock stop function which is effective to initiate selective interruption of the clocks of selected partitions of the processor served by the clock control unit 20. The broadcast action bit 1 enables the freeze trace function, bit 2 the internal broadcast function, while bit 4 enables the clock control unit 20 to rebroadcast an HXBRCHKIN signal.

The gates of the array 85 are conventional, positive logic AND gates. The gates 85-1, 85-2, 85-3 and 85-5, respectively, gate the HXBRCHKIN0 signal to a clock stop OR gate 90, a check freeze OR gate 92, and internal broadcast OR gate 93, and a broadcast OR gate 95, based upon the states of bits 0, 1, 2, and 4 of register 87, respectively.

The HXBRCHKIN 1 and 2 signals are identically selectively gated to the OR gates 90, 92, 93, and 95.

In addition to receiving the gated HXBRCHKIN0-2 signals, the check freeze OR gate 92 also receives local Level 1, and Level 2/3 HI and LO check signals when gated by bits 0, 1 and 2 of the check action register 83.

In addition to the gated HXBRCHKIN0-2 signals, the broadcast OR gate 93 also receives local Level 1 and Level 2/3 check signals, when gated by bits 3 and 4 of the check action register 83.

Finally, the broadcast OR gate 95, in addition to receiving the gated HXBRCHKIN0-2 signals, receives the local Level 1 and Level 2/3 check signals, when gated by check action register bits 3 and 4, respectively.

The OR gate 90, when activated by a gated HXBRCHKIN signal, provides at its output a signal labelled CLOCK STOP. The OR gate 92 activates a CHECK FREEZE signal at its output in response to a gated local machine check or a gated broadcast machine check. In response to a gated local machine check or HXBRCHKIN signal, the OR gate 93 sets all bits of an internal broadcast (BRDCAST) register 94. The internal broadcast register 94 has three storage positions, each connected to conduct an HBBCHK signal to a respective one of the processing units 10-1 through 10-3. For example, the output of bit position 0 of the internal broadcast register 94 is connected to transfer the HBBCHK signal to the processing unit 10-1. The OR gate 95 responds to gated level machine check and HXBRCHKIN signals by producing a broadcast pulse on signal line 97 which is conducted to a broadcast pulse generator 98. In the preferred embodiment, the pulse generator 98 widens the width of the broadcast pulse received on signal line 97 in order to account for asynchronility in the operation of the clock control units. The stretched broadcast pulse is output by the generator 98 on each of the three signal lines comprising the transfer path 56. On the three signal lines of path 56, the broadcast pulse is labelled HXBRCHK.

The portion of the collection and broadcast circuit 50 which responds to either internally generated or broadcast address match indication is illustrated in Figure 4. In Figure 4, a match configuration register 169 has a conventional digital mask consisting of a one-dimensional array of digital bits which is used to selectively mask address match signals received from the processing units 10-1 through 10-3 into a match register 170. The match register is a conventional parallel in-parallel out device whose outputs are collected at the input of a conventional OR gate 171. An array of AND registers 181 gates the output of the OR gate according to the condition of bits in a match action register 183. Match action register bit 0 enables a clock stop function through AND gates 181-1, bit 1 the freeze trace function through AND gate 181-2, and bit 2 the broadcast function through AND gate 181-3. The broadcast match signals HXBRMCHIN0-2 are registered into the clock control unit 20 in metastable latches 177-179, respectively. As with the broadcast machine check signals, the broadcast address match signals are gated by respective match action register bits in the match action register 187, 188 and 189 in cooperation with AND gate arrays 182 - 184, respectively. The gated locally generated and the gated broadcast address match signals are fed to OR gates 190, 192, 193 and 195.

The OR gate 190 generates a MATCH STOP signal in response to a locally generated address match signal or a broadcast address match signal gated by bit 0 in the match action register 183 or bit 0 of one of the broadcast match action registers 187-189.

A FREEZE TRACE signal is activated by the OR gate 192 in response to a locally generated address match or a broadcast address match signal gated by bit 1 of the match action register 183 or bit 1 of one of the broadcast match action registers 187-189.

The OR gate 193 generates an internal broadcast address match signal HBBMCH in response to a locally generated or broadcast address match signal gated by bit 2 of the match action register on bit 2 of the broadcast match action registers 187-189. HBBMCH is registerd into each bit position of the broadcast register 194 and transferred therefrom to each of the processing units 10-1 through 10-3. For example, bit position 0 of the register 194 provides the HBBMCH signal transferred to processing unit 10-1 on signal lead 49.

The OR gate 195 feeds a broadcast pulse on signal line 197 to a pulse generator 198 in response to an internally generated address match or a broadcast address match gated to the OR gate 195 by bit 2 of the

7

match action register 183 or bit 4 of one of the broadcast match action registers 187-189. As with the generator 98, the pulse generator 198 stretches the broadcast pulse received on the signal line 197 to accommodate the asynchronous operations of the clock control units connected to the unit 20.

Figure 5 illustrates in greater detail the clock gate control unit 52. In the clock gate control unit 52, the CLOCKSTOP signal on line 61, and provided by the machine check portion of the collection and broadcast circuit 50, gates the contents of a check stop mask register 205 through an AND gate circuit 206. The check stop mask register 205 contains a one-dimensional n-bit stop mask, in which each bit corresponds to a respective processing unit of the processor served by the clock control unit 20. A "1" indicates that the corresponding unit is to have its operation suspended by interruption of its clocks. A "0" in a bit position indicates that the corresponding unit is to continue running. Similarly, the MATCH STOP signal on signal line 63 and generated by the address match portion of the collection and broadcast circuit 50 gates, a match stop mask 201 through an AND gate circuit 202. A selected mask is fed from its respective AND gate circuit through an OR gate 207 and an inverter 209 to a clock run gate register 210. The inverted mask is entered into the clock run gate register 210, wherefrom it is provided to the processing unit served by the clock control unit 20 as the clock run gate signals. Thus, in response to either a MATCH STOP or an CLOCK STOP signal, the clock run gates for the masked processing unit will be deactivated, thereby suspending operation of the masked processing units.

It is asserted that the apparatus of the invention provides a broadcast function across the clock rate boundary illustrated in Figure 1. In Figure 1 the processor 10 operates at a clock rate (SYS CLOCK RATE) that is different than, and asynchronous to, the clock rate (I/O clock rate) at which the three processors 12, 14, and 16 operate. The invention meets the challenge of broadcasting a system clock array address match condition to the three clock control units 22, 24 and 26. It also supports the broadcast across the clock rate boundary from any one of the I/O clock units 22, 24 or 26, to the clock control unit 20, it being understood that interprocessor broadcast on the I/O clock rate side of the boundary is also conducted.

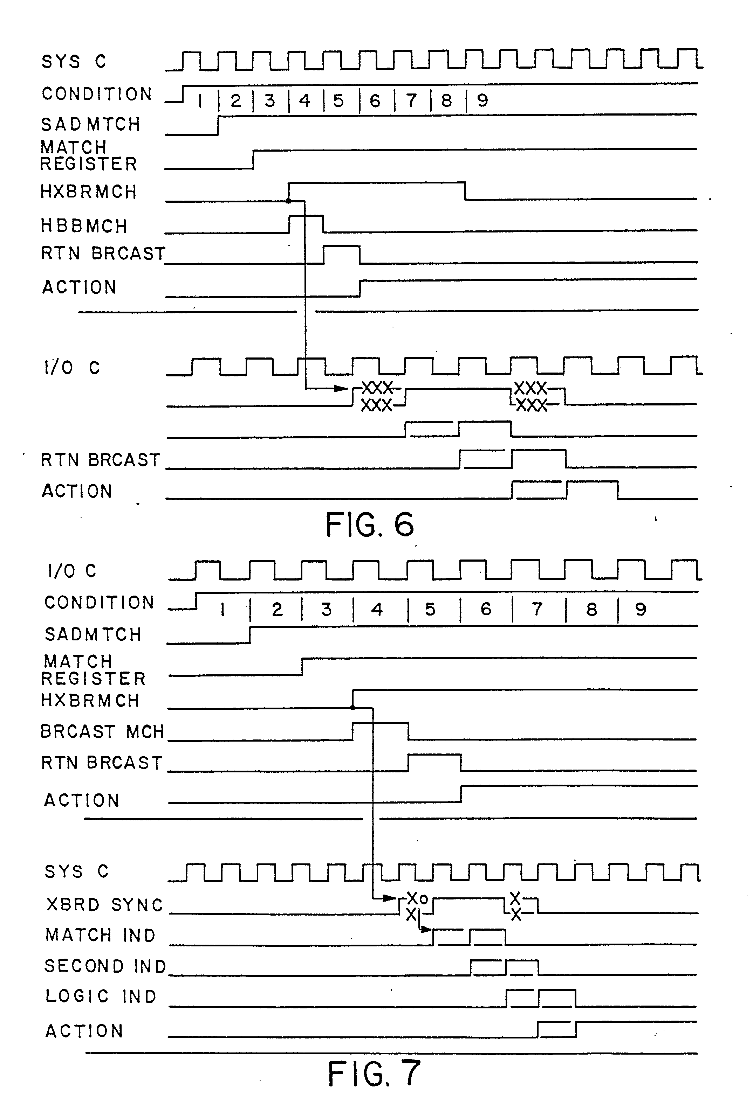

Timing of the broadcast function is shown in Figure 6 for an address match condition occurring at the system clock rate in the processor 10. With reference to Figures 2, 3, 4, and 6, an exemplary operational sequence of the invention will be described. In the sequence, an address match or error condition is detected in a processing unit 10-1 of the processor 10 at the system clock rate and is broadcast across the clock rate boundary processor clock units. The system clock waveform (SYS C) is illustrated in Figure 6. The CONDITION waveform represents the occurrence of a condition in the processing unit 10-1. The sequence of numbers from 1 through 9 on the interior of the CONDITION waveform signify a sequence of machine cycles, where a machine cycle is defined as one oscillation of the SYS C waveform. Assuming the condition occurring is an address match, and that the output of the comparator 34 rises at the beginning of machine cycle 1, the match collection register 35 will activate the SADMTCH signal at the beginning of machine cycle 2. The SADMTCH signal is registered into the bit position of the match register 170 dedicated to collection of SADMATCH from the processing unit 10-1, with the signal provided at the output of that bit position at the beginning of machine cycle 3. Assuming that bit 2 of the match action register 183 is set, the AND gate 181-3 will pass the address match signal to the OR gate 195 during machine cycle 3. In response to gating of the address match signal through the OR gate 195, the pulse generator produces a five cycle-long pulse extending from the beginning of machine cycle 4 through the beginning of machine cycle 9. The address match signal is also passed by the OR gate 193 to the internal broadcast register 194, which sends the internal broadcast indication to the processing unit of the processor 10 in the form that the HBBMCH signal, a 1-cycle pulse beginning with machine cycle 4. The RTN BRCAST signal represents latching of the HBBMCH signal into the processing unit. The ACTION waveform represents the predetermined action taken by the processing in response to the broadcast internal to the processor 10.

Continuing with the explanation of broadcast of an address match condition, the lower set of waveforms in Figure 6 represents the operational sequence followed by each of the clock control units 22, 24 and 26 in response to the five cycle-long pulse produced by the generator 198. In the remainder of this explanation, it is asserted that Figure 4 represents the address match portion of the collection and broadcast circuit of each of the clock control units 22, 24 and 26. It is observed that these units operate in response to a processor clock which is asynchronous with, and has a rate unequal to, the SYS C of the processor 10. The waveform I/O C represents this clock. The five cycle-long pulse produced by the generator 198 is transferred to each of the clock control units 22, 24 and 26 on respective signal lines of the transmission path 57. The signal is received in the metastable latch of the clock control unit connected to the signal line on which the pulse is transferred. The pulse is received as one of the HXBRMCHIN signals and is clocked into the metastable latch. Assuming that bits 2 and 4 of the broadcast match action register gating the output of the metastable latch are set, the OR gate in the receiving clock control unit corresponding to the OR gate 193 of Figure 4 will pass the signal to the internal broadcast register which will provide the internal broadcast to the processing units of the receiving processor. Although not shown in Figure 6, of bit 4 of the broadcast match action register, if set, will also cause the HXBRMCHIN signal to be rebroadcast to all of the other clock control units, including the one serving the processor wherein the address match condition occurred.

Refer now to Figure 7, where a local match condition is detected, registered and broadcast as HXBRMCH by one of the clock control units 22, 24 and 26, and received by the SYS C clock control unit 20. The broadcast match condition is received as one of the HXBRMCHIN signals and synchronized to the operations of the clock control unit by registration into one of the metastable latches (XBRD SYNC). Assume now that bit 0 of the broadcast match action register associated with the receiving metastable latch has been set. The received broadcast match signal is gated through OR gate 190 to the clock gate control circuit 50 (Figure 5). In Figure 5, the received match stop (MATCH STOP) signal is conducted on signal line 63a to the AND gate 202. This activates the gate and transfers the complement of the match stop mask to the clock run gate register 210 through the OR gate 207 and inverter 209. This will effect an interruption of the clock run gate signals.

It should be evident that the explanation just given for broadcast of a match stop condition is applicable also to receipt of a level machine check condition either broadcast as HXBRCHKIN from another clock control unit, or received from the processing units in the processor served by the clock control unit.

The broadcast feature of this invention provides a flexible mode of control and response to detected machine conditions. The flexibility is provided by the connection of the support processor 30 to all of the check action registers of each of the clock control units, as well as to the match configuration register and to the match stop and check stop masks. Preferably, these registers are included in the addressable storage space of the support processor, thereby providing direct programmability of these registers by way of a program executed in the support processor 30.

Upon the occurrence of one of the conditions monitored and responded to by this invention, the ability to freeze trace arrays in each of the processors served by the invention is invaluable for diagnosing the state of the machine comprising the processor wherein the condition occurred, trace array diagnosis is of interest with reference to the specific locality where an error occurred. Given the evolution in machine design and architecture toward parallel processing and loose-coupling, there is a growing number of situations in which trace information in other parts of a machine, or in various processors, would greatly aid in diagnostic activities. Particularly, freezing traces in more than one processor is of interest in multi-processing environments where micro-code timing is important. Consequently, trace arrays must be simultaneously arrested across card, board, frame, and processor boundaries.

The programmability of the action registers in the machine check and address match portions of the collection and broadcast circuit 50 permits direct control of the freeze trace process by the support processor 30.

As an example of a freeze trace response, assume receipt of HXBRCHKIN0 through metastable latch 77 in Figure 3. Assume that bit 1 of the action register 87 is set, which gates the broadcast machine check through AND gate 85-2 and OR gate 92. The output of the OR gate 92 (CHECK FREEZE) is fed through the OR gate 192 and the address match portion illustrated in Figure 3. This activates the output of the gate, thereby setting each cell of the freeze trace register 192a. The freeze trace register 192a is a conventional parallel-in-parallel-out register. When the output of the OR gate 192 is activated, each cell of the register is set, thereby providing, through the outputs of the register cells, freeze trace signals which are transferred to processing units of the processor served by the clock control unit.

A high level flow of the freeze trace function is illustrated in Figure 8. In Figure 8, a clock control unit 300 receives a broadcast machine check which, as just described, sets the cells of freeze trace register 301. Freeze trace signals are provided to a plurality of processing units in the processor served by the clock control unit 300. One such unit is indicated by 302. The processing unit 320 includes a secondary clock maintenance apparatus 322. The secondary clock maintenance apparatus 322 includes a latch 323 for registration of the freeze trace signal from the clock control unit 300. The registered freeze trace signal is passed to a logic chip 324 having a freeze trace switch 328 which controls a trace data accumulation function 326. The function 326 can, for example, constitute a micro-programmed procedure. Upon receipt of the machine check signal, the freeze trace signal is staged from the clock control unit 300, through the secondary maintenance unit 322 to open the switch 328, thereby interrupting the tracing function 326. The support processor 30 synchronizes the freeze trace activities by exerting reset control over the register 301 in latch 323. In addition, the support processor 30 is connected to read the frozen trace data from the process 326 in synchronism with the trace functions.

Alternatively, the freeze trace function can be triggered by response to a broadcast address match received by the clock control unit 300. In this regard, broadcast the match signal is received by a

EP 0 348 663 A2

metastable flip-flop, gated by bit 1 of one of the broadcast match action registers to the OR gate 192.

## Claims

1. In a processing system including a plurality of connected, loosely-coupled processors, each processor including indication means for providing machine and process condition indications, and a remotely-programming support processor connected to said processors, an improvement for simultaneously communicating a condition indication arising in one of said processors to all of said processors, wherein said improvement comprises:
in a first of said units:
a condition indication collector connected to the indication means in said unit for collecting condition indications produced by said indication means;
a programmed action indicator for producing action directive signals, a first of said action directive signals being a broadcast directive signal for indicating that a condition indication signal is to be communicated to said units; and
a condition broadcaster connected to said condition indication collector and to said programmed action indicator for combining a first one of said collection indications with said first action directive signal to produce a condition indication broadcast signal;
transfer means for transferring said condition broadcast signal to each of said units; and in a second of said units:
a process unit process for process execution; a programmed broadcast response indicator for producing broadcast action directive signals, a first broadcast action directive signal indicating a first response mode in which said process is interrupted;
a broadcast response circuit connected to said transfer means and to said programmed broadcast response indicator for combining said first broadcast action directive signal with said condition indication broadcast signal to produce a process interruption signal; and
interrupting means connected to said broadcast response circuit and to said process unit for interrupting said process execution in response to said process interruption signal.

2. The improvement of Claim 1 wherein said condition indications are machine check indications and said condition broadcast signal is a machine check broadcast signal for indicating occurrance of a machine error in said first processor.

3. The improvement of Claim 1 wherein said condition indications are address match indications and said condition broadcast signal is an address match broadcast signal for indicating occurrance of an address match in said first processor.

4. The improvement of Claim 3 wherein said process unit includes means for trace process execution and said interrupting means is for freezing said trace process execution in response to said process interruption signal.

5. The improvement of Claim 1, a second broadcast action directive signal indicating a rebroadcast response mode in which said condition indication broadcast signal is broadcast to said processors, said improvement further comprising:
in said broadcast response circuit, a condition broadcaster connected to said transfer means and to said programmed response indicator for combining said second broadcast action directive signal with said condition indication broadcast signal to provide a condition indication rebroadcast signal to said transfer means for transfer to said processors.

6. The improvement of Claim 1, a second broadcast action directive signal indicating an internal broadcast mode in which said condition indicaion broadcast signal is broadcast internally to said second processor, said improvement further comprising:
in said broadcast response circuit, internal broadcast means connected to said transfer means and to said programmed response indicator for combining said second broadcast action directive signal with said condition indication broadcast signal to provide an internal rebroadcast signal, and
in said second processor, internal broadcast means for broadcasting said internal rebroadcast signal within said second processor.

7. In a processing system including a plurality of loosely-coupled processors, each processor for conducting process execution and including indication means for providing machine condition indication, interruption means for arresting process execution, and programmable action registers, a method for communicating machine condition indications among said processors, including the steps of:
at a first processor:

10

programming a first action register with local action directive signals; and

in response to a local action direction signal in said first action register and to a machine condition indication, generating a condition broadcast pulse;

transferring said condition broadcast pulse from said first processor to every other processor; and

at a second processor:

programming a second action register with broadcast action directive signals; and

in response to a first broadcast action directive signal in said second action register and to said condition broadcast pulse, arresting process execution.

8. The method of Claim 7 further including the steps of:

at said second processor, in response to a second broadcast action directive signal in said second action register, generating a condition rebroadcast pulse; and

transferring said condition rebroadcast pulse from said second processor to every other processor.

9. The method of Claim 7 further including the steps of:

at a third processor:

programming a third action register with broadcast action directive signals; and

in response to a broadcast action directive signal in said third action register and to said condition rebroadcast signal, arresting process execution.

10. An apparatus for broadcasting condition indications between loosely-coupled processors, comprising:

a first programmable action indicator for providing a plurality of programmed local action directive signals, a first local action directive signal being for broadcast of processor condition indications;

a condition indication collection for providing processor condition indications;

a condition broadcaster connected to said first programmable action indicator and to said condition indication collector for combining said first local action directive signal with a processor condition indication for generating an output broadcast condition indication signal;

a second programmable action indicator for providing a plurality of programmed broadcast action directive signals, a first broadcast action directive signal being for process arresting;

a broadcast indication collector for providing an input broadcast condition indication signal; and

combining means connected to said second programmable action indicator and to said broadcast indication collector for combining said first broadcast action directive signal with said input broadcast indication signal to produce a process arrest signal for process interruption. .

11. The apparatus of Claim 10 wherein a second broadcast action directive signal is for rebroadcasting, said condition broadcaster being connected to said second programmable action indicator and to said broadcast indication collector for combining said second broadcast action directive signal and said input broadcast condition indication signal for generating an output rebroadcast condition indication signal.

EP 0 348 663 A2

10-1    10-2    10-3    10

| PU0 | PU1 | PU2 |

2    2    2

30

S P

20    CLKCNTL

SYS CLOCK RATE
IO CLOCK RATE

20-1    4  4  4    20-3

20-2

CLKCNTL    CLKCNTL    CLKCNTL

22    2    24    2    26    2

12-1    12-2    12-3

| I O E | I O E | I O E |

12    14    16

FIG. I

FIG. 2

FIG. 3

FIG. 4

FIG. 5

FIG. 8

EP 0 348 663 A2

FIG. 6

FIG. 7

IBM — EN 987 047